# EUROPEAN PATENT APPLICATION

(11) **EP 4 560 382 A1**
(43) Date of publication of application: **28.05.2025**
(21) Application number: 23842007.9
(22) Date of filing: 25.06.2023
(51) Int. Cl.: G02B 30/22, G02F 1/13

(54) **METAVERSE 3D DISPLAY SYSTEM AND METHOD, AND RELATED DEVICE**

(30) Priority: 18.07.2022 CN 202210873922
(71) Applicant: Future Technology (Xiang Yang) Co., Ltd, Xiangyang, Hubei 441000 (CN)
(72) Inventor: HE, Shu, Xiangyang, Hubei 441000 (CN); GAO, Wei, Xiangyang, Hubei 441000 (CN)
(74) Representative: Winter, Brandl - Partnerschaft mbB
(86) International application number: PCT/CN2023/102088
(87) International publication number: WO 2024/016941

(57) **Abstract**

A metaverse 3D display system (10) and method, and a related device, which are used for displaying a real 3D effect. The metaverse 3D display system (10) comprises a 3D display screen (101), the 3D display screen (101) comprising a liquid crystal grating (1011), a liquid crystal display module (1012) and a backlight module (1013), which are sequentially attached from top to bottom, wherein the liquid crystal grating (1011) is formed by grating units, which are arranged in an array, the grating units correspond to pixel units of the liquid crystal display module (1012) on a one-to-one basis, and the arrangement direction of the grating units and the long-side direction of sub-pixels of the pixel units are perpendicular to each other or form an included angle less than 45 degrees; and a processor (102), which is used for adjusting, according to a pixel depth value of a 3D picture to be displayed, a voltage applied to a corresponding grating unit, wherein the liquid crystal grating (1011) is used to display a 3D image on the liquid crystal display module (1012).

## Description

### Technical Field

The present application relates to the field of 3D image displaying, and in particular to a metaverse 3D displaying system, a metaverse 3D displaying method and related devices.

### Background

The metaverse is a virtual world that is linked and created using technological means to map and interact with the real world, and it is a digital living space with a new social system. Currently, most of the display terminals of the metaverse are head-mounted AR devices. However, like that the communication terminals are in many forms such as mobile phones, watches, tablets, and headsets, AR devices are not the only form of display terminals inherent to the metaverse. The movie «Avatar» reveals a kind of holographic suspended aerial imaging, which becomes people's ideal display terminal for the metaverse. Controlling an "Avatar" to move and socialize in another world is the prototype of the metaverse and the ultimate dream about the metaverse. More than 10 years later, in the movie «Avatar 2», people finally realized a naked-eye 3D movie screen that did not require glasses, which was a leap forward in the 3D display.

Among the 3D display systems, due to the unique characteristics of the naked-eye 3D displays and that the 3D effect can be viewed without wearing visual aid glasses or helmets and the realistic depth of field and three-dimensional effect greatly improve the visual impact and immersion of the audiences. the naked-eye 3D displays become the best display products for product promotion, publicity and image playback. At present, the naked-eye 3D imaging devices can be divided into the liquid crystal grating type, the liquid crystal electronic grating type, the electronic grating type, the physical lenticular grating type, and the physical slit grating type according to their structures, and can be divided into the slit grating type, the cylindrical lens grating type, and the projection grating type according to the principles. Due to the characteristics of the slit grating type and the cylindrical lens grating type, the display content needs to be encoded, and meanwhile, high accuracy and uniformity of the structures of the slit grating type and the cylindrical lens grating type are required. A large volume is resulted by multi-view projection, and processing of projection data of multi-channel is needed, which requires better hardwares. The structure of high-speed scanning is simple, but the high-speed projectors are expensive, and the synchronization between the rotating structure and the projector is extremely demanding. Therefore, there is still room for improvement in existing naked-eye 3D display.

### Summary

Based on a liquid crystal electronic grating, the present application provides a metaverse 3D display system, a metaverse 3D display method and related equipments to achieve a more realistic 3D display effect.

A first aspect of the embodiments of the present application provides a metaverse 3D display system including:
a 3D display screen, where the 3D display screen includes a liquid crystal grating, a liquid crystal display module and a backlight module that are laminated sequentially from top to bottom, the liquid crystal grating includes grating units arranged in an array, the grating units correspond to pixel units of the liquid crystal display module one to one, a direction of each grating unit is perpendicular to long sides of sub-pixels of the pixel units, or an included angle between the direction of each grating unit and the long sides of the sub-pixels of the pixel units is less than 45 degrees;
a processor configured to adjust voltages applied to the grating units according to depth values of pixels of a 3D image to be displayed, and display the 3D image on the liquid crystal display module through the liquid crystal grating.

A second aspect of the embodiments of the present application provides a 3D display method applied to metaverse. The 3D shooting system includes a mobile device with a camera and a target peripheral. The target peripheral is installed on the mobile device. The 3D shooting system includes: the camera configured to photograph a calibration plate and obtain a first left view and a first right view through a lens of the target peripheral; a calibration unit configured to performs a calibration operation on the mobile device according to the first left view and the first right view; the camera further configured to capture a target scene to obtain a second left view and a second right view; a splicing unit configured to splice the second left view and the second right view to obtain a 3D picture.

A third aspect of the present application provides a computer device, which includes at least one connected processor, a memory and a transceiver, the memory is configured to store program code, and the processor is configured to call the program code in the memory to execute the 3D display method applied to metaverse of the second aspect above.

A fourth aspect of the present application provides a computer storage medium for storing instructions, when the instructions are run by a computer, the 3D display method applied to the metaverse of the second aspect is realized by the computer.

In summary, it can be seen that in the embodiments provided by the present application, the metaverse 3D display system includes: a 3D display screen, where the 3D display screen includes a liquid crystal grating, a liquid crystal display module and a backlight module that are laminated sequentially from top to bottom, the liquid crystal grating includes grating units arranged in an array, the grating units correspond to pixel units of the liquid crystal display module one to one, a direction of each grating unit is perpendicular to long sides of sub-pixels of the pixel units, or an included angle of the direction of each grating unit and the long sides of the sub-pixels of the pixel units is less than 45 degrees; a processor configured to adjust voltages applied to the grating units according to depth values of pixels of a 3D image to be displayed, and display the 3D image on the liquid crystal display module through the liquid crystal grating. It can be seen that by electronically controlling the electric field distribution of the liquid crystal and adjusting the voltages applied to the corresponding grating units according to the depth values of the pixels of the 3D image, the 3D image can be displayed more realistically.

### Brief Description of Figures

FIG. 1 is a virtual structural diagram of a metaverse 3D display system according to an embodiment of the present application.
FIG. 2a is a scene application diagram of the metaverse 3D display system according to an embodiment of the present application.
FIG. 2b is a diagram showing a possible component arrangement according to an embodiment of the present application.
FIG. 3 is a schematic flowchart of a 3D picture shooting method according to an embodiment of the present application.
FIG. 4 is a schematic block diagram of a hardware structure of a server according to an embodiment of the present application.

### Detailed Description

The embodiments of the present application will be clearly and completely described below with reference to the drawings in the embodiments of the present application. Obviously, the described embodiments are only some, not all of the embodiments of the present application.

The metaverse is a virtual world that is linked and created using technological means to map and interact with the real world, and it is a digital living space with a new social system. Its essence is the virtualization and digitization of the real world, which requires a large number of transformations in content production, economic systems, user experience, and physical world content.

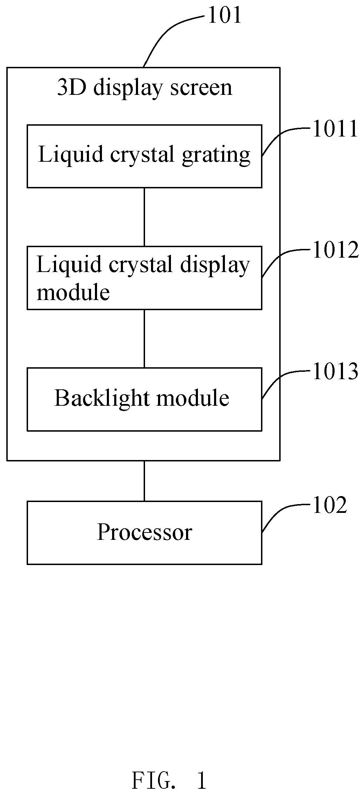

Based on this concept, the present application provides a metaverse 3D display system. Referring to FIG. 1, FIG. 1 is a schematic structural diagram of a metaverse 3D display system 10 according to an embodiment of the present application. The metaverse 3D display system 10 includes a 3D display screen 101 and a processor 102. The 3D display screen includes a liquid crystal grating 1011, a liquid crystal display module 1012 and a backlight module 1013 that are laminated sequentially from top to bottom. The liquid crystal grating 1011 includes grating units arranged in an array, and the grating units correspond to pixel units of the liquid crystal display module 1012 one-to-one. A direction of each grating unit is perpendicular to long sides of sub-pixels of a corresponding pixel unit, or an included angle between the direction of the grating unit and the long sides of the sub-pixels of the corresponding pixel unit is less than 45 degrees. The processor 102 is configured to adjust voltages applied to the grating units according to depth values of pixels of a 3D image to be displayed, and display the 3D image on the liquid crystal display module 1012 through the liquid crystal grating.

It should be noted that when the 3D display screen 101 is in a 3D display mode, the processor 102 supplies voltages to the grating units of the liquid crystal grating 1011. After the 3D display screen 101 is switched from the 3D display mode to a 2D display mode, the processor 102 removes the voltages to the grating units.

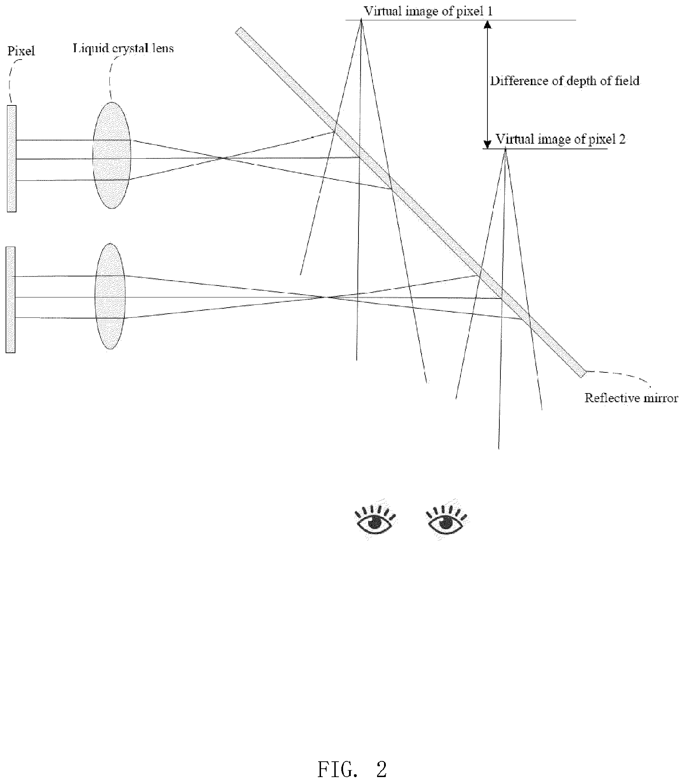

In an embodiment, the processor 102 is further configured to adjust values of voltages applied to electrodes corresponding to the grating units corresponding to the pixels of the 3D image to be displayed according to changed amounts of depth values of depth information of the pixels. The 3D image includes a 2D image and a depth image corresponding to the 2D image. When a pixel value is changed, a depth value corresponding to the pixel value is changed accordingly. One side of the liquid crystal grating, which faces the liquid crystal screen, is a ground electrode, and the ground electrode can also be called a plane electrode. Another side of the liquid crystal grating is provided with strip electrodes arranged in an array. The strip electrodes correspond to the pixel units of the liquid crystal display module one-to-one. The strip electrodes are located corresponding to centers of the pixel units and perpendicular to the long sides of the sub-pixels. Referring to FIG. 2b for details, FIG. 2b is a diagram showing a possible arrangement of components according to an embodiment of the present application. As shown in the figure, a direction of each grating unit is perpendicular to the long sides of the sub-pixels of the pixel unit, or an included angle between the direction of each grating unit and the long sides of the sub-pixels of the pixel unit is less than 45 degrees. The strip electrodes are located corresponding to the centers of the pixel and perpendicular to the long sides of the sub-pixels, that is, the long sides of the R, G and B sub-pixels. An AC voltage relative to the ground electrode is applied to each strip electrode at a specific frequency, and the voltage applied to each strip electrode is changed as the depth value of the corresponding pixel changes, causing a focal length of an equivalent lenticular lens of the grating unit corresponding to the corresponding pixel to change.

In an embodiment, the metaverse 3D display system also includes an optical system. The pixels of the liquid crystal display module 1012 are gathered in front of the 3D display screen through lenses. The optical system is configured to present the pixels of the liquid crystal display module as virtual images. Pixels whose convergence points are located in front of a first reflective mirror show an in-screen effect, and pixels whose convergence points are located behind the first reflective mirror present an out-of-screen effect. The optical system includes one or more of the following reflective mirrors: concave mirrors, convex mirrors, or plane mirrors, and the first reflective mirror is the last mirror which realizes the last reflection.

It should be noted that when the 3D display screen 101 is in the 3D display mode, a non-zero basic voltage is applied to all the electrodes, and the basic voltage is used to form virtual images of the pixels of the liquid crystal display module through the optical system, and determine the minimum viewing angle range of the metaverse 3D display system together with the optical system. V=A+D*B, V represents the voltage applied to the electrode corresponding to the corresponding pixel, A represents the basic voltage, D represents the depth value of the corresponding pixel, and B is a constant coefficient.

in addition, the backlight module includes a plurality of light source arrays arranged at intervals in sequence. A gap filling layer is included between the light source arrays and the liquid crystal display module. A thickness of the gap filling layer is M, where M=L*D/N, L represents a viewing distance which is a distance between the human eyes and the liquid crystal display module, D is the minimum size of the pixel molecular unit, and N represents an interpupillary distance which is a true distance between the viewer's eyes.

In an embodiment, the metaverse 3D display system includes an electric controlled liquid crystal lens panel. The electric controlled liquid crystal lens panel is attached to a surface of the liquid crystal display module. When the electric controlled liquid crystal lens panel is working, the naked-eye 3D display system is in a 3D display mode, and when the electric controlled liquid crystal lens panel is not working, the 3D display system is in a 2D display mode.

In order to better understand the embodiments of the present application, FIG. 2 is referred. Pixel 1 and pixel 2 are projected onto the reflective mirror through corresponding liquid crystal lenses, and a virtual image of pixel 1 and a virtual image of pixel 2 are generated, and a difference of depth of field is formed between the two virtual image. The virtual images are viewed by the viewer's eyes and the viewer's brain combines the images seen by the left and right eyes into an image with a 3D effect.

The embodiments of the present application are described above from the perspective of the metaverse 3D display system, and embodiments of the present application are described below from the perspective of the 3D display method applied to metaverse.

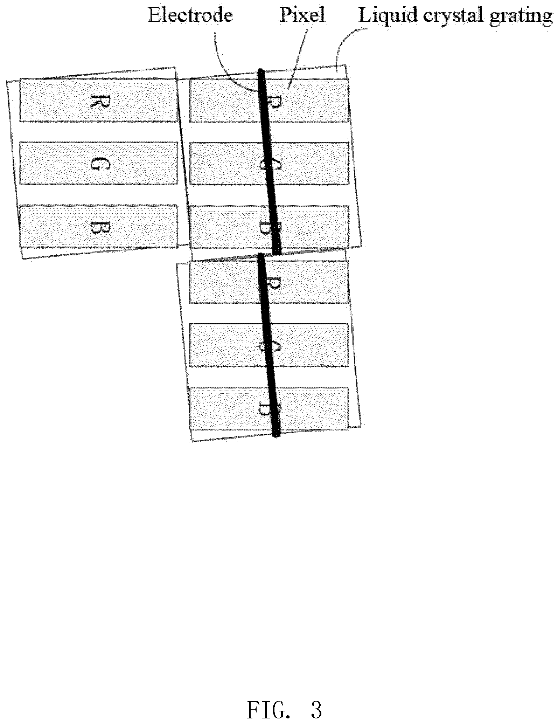

Referring to FIG. 3. FIG. 3 is a schematic flow chart of a 3D display method applied to metaverse according to an embodiment of the present application. The 3D display method includes a 3D display screen, and the 3D display screen includes a liquid crystal grating, a liquid crystal display module and a backlight module that are laminated sequentially from top to bottom. The liquid crystal grating includes grating units arranged in an array, and the grating units correspond to pixel units of the liquid crystal display module one-to-one. A direction of each grating unit is perpendicular to long sides of sub-pixels of a corresponding pixel unit, or an included angle between the direction of each grating unit and the long sides of the sub-pixels of the corresponding pixel unit is less than 45 degrees. The method includes:
operation 301, adjusting voltages applied to the grating units according to depth values of pixels of a 3D image to be displayed; and
operation 302, displaying the 3D image on the liquid crystal display module through the liquid crystal grating.

In an embodiment, a voltage value of voltage applied to each electrode of each grating unit corresponding to each pixel of the 3D image to be displayed is adjusted according to a changed depth value of depth information corresponding to the pixel. The 3D image includes a 2D image and a corresponding depth image. When a pixel value of a pixel is changed, a corresponding depth value is changed accordingly. One side of the liquid crystal grating facing the liquid crystal screen is a ground electrode and the other side of the liquid crystal grating is provided with strip electrodes arranged in an array. The strip electrodes correspond to the pixel units of the liquid crystal display module one by one. Each strip electrode is located corresponding to a center of a corresponding pixel unit and perpendicular to long sides of sub-pixels. An AC voltage relative to the ground electrode is applied to each strip electrode at a specific frequency. The voltage applied to each strip electrode changes as a depth value of a corresponding pixel changes, causing a focal length of an equivalent lenticular lens of a grating unit corresponding to the corresponding pixel to change.

It should be noted that when the 3D display screen is in the 3D display mode, voltages are applied to the grating units of the liquid crystal grating, and when the 3D display screen is switched from the 3D display mode to the 2D display mode, the voltages are removed. When the 3D display screen is in the 3D display mode, a non-zero basic voltage is applied to all electrodes. The basic voltage is utilized for the formation of virtual images of the pixels of the liquid crystal display module through the optical system, and for the formation of the minimum viewing angle range of the metaverse 3D display system together with the optical system. V=A+D*B, V represents the voltage applied to the electrode corresponding to the corresponding pixel, A represents the basic voltage, D represents the depth value of the corresponding pixel, and B is a constant coefficient. In addition, if the viewing angle range is smaller than a preset value in actual application, a thickness of a liquid crystal cell in the optical system cannot be too thick. If the liquid crystal cell is too thick, it needs to be filled with spacers. The spacers are particulate transparent glass beads, which has bad influence on display of the screen.

In an embodiment, the Metaverse 3D display system includes an electric controlled liquid crystal lens panel. The electric controlled liquid crystal lens panel is attached to a surface of the liquid crystal display module. When the electric controlled liquid crystal lens panel is working, the naked-eye 3D display system is in the 3D display mode, and when the electric controlled liquid crystal lens panel is not working, the 3D display system is in the 2D display mode. The electric controlled liquid crystal lens panel includes a first lens substrate, a second lens substrate opposite to the first lens substrate, and liquid crystal between the first lens substrate and the second lens substrate. A plurality of discrete first electrodes arranged in a matrix are located on the first lens substrate. In this embodiment, a material of a transparent conductive layer may be indium tin oxide (ITO) or indium zinc oxide (IZO), so that the electrodes do not affect the light transmission of the electric controlled liquid crystal lens panel. The first electrodes are coupled to a first driving circuit through first thin film transistors (not shown), and a second electrode is connected to a common potential. The common potential is the ground or a fixed voltage. In this embodiment, the second electrode may be the transparent conductive layer. The display screen is divided into three sub-pixel sets R, G and B, and the sub-pixel set R (the other two sub-pixel sets are processed in the same way) is divided into a left sub-pixel set and a right sub-pixel set by lines perpendicular to center lines of liquid crystal microlens. The sub-pixel unit sets display the left eye image and the right eye image respectively. The images displayed by the two pixel unit sets are refracted by the corresponding liquid crystal microlenses and then enter the left eye and the right eye of the viewer respectively. The brain integrates the left eye image and the right eye image to present the 3D image. The 3D display effect can not only be viewed from a horizontal viewing angle, but also be viewed from a vertical viewing angle, which enlarges the viewing angle of the 3D/2D switchable display device.

In addition, the backlight module includes a plurality of light source arrays arranged at intervals in sequence. A gap filling layer is included between the light source array and the liquid crystal display module. A thickness of the gap filling layer is M, and M=L*D/N, where L represents a viewing distance between the human eyes and the liquid crystal display module, D is the minimum size of the pixel molecular unit, and N represents an interpupillary distance, which is a true distance between the viewer's eyes.

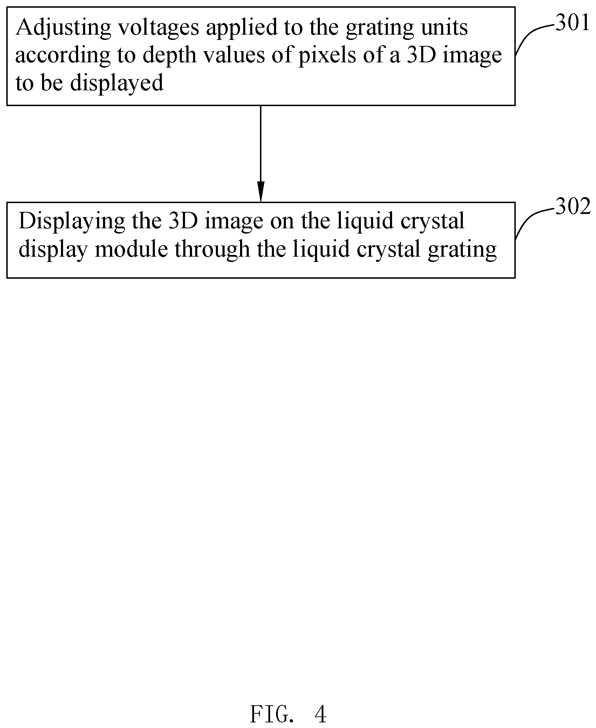

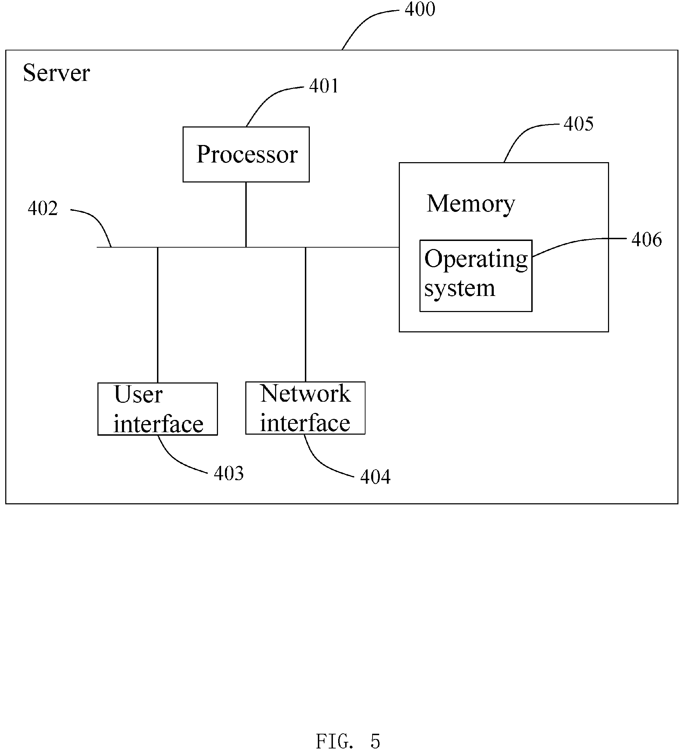

FIG. 4 is a schematic structural diagram of a server provided by the present application. As shown in FIG. 4, the server 400 includes at least one processor 401, at least one network interface 404 or another user interface 403, a memory 405, and at least one communication bus 402. The server 400 optionally includes the user interface 403 which may include a display, a keyboard or a clicking device. The memory 405 may be a high-speed RAM memory, or a non-volatile memory (non-volatile memory), such as at least one disk memory. The memory 405 stores executable instructions. When the server 400 is running, the processor 401 communicates with the memory 405, and the processor 401 calls the executable instructions from the memory 405 to realize the above-mentioned 3D display method applied to the metaverse. The operating system 406 includes various programs for implementing various basic services and processing hardware-based tasks.

The server according to the embodiment of the present application, the processor 401 can perform the above-mentioned operations of the 3D display method applied to the metaverse to realize the 3D display method applied to the metaverse. The implementation principles and technical effects thereof are similar to the method embodiment, and details will not be repeated here.

Embodiments of the present application also provide a computer-readable medium that includes computer-executable instructions. The computer-executable instructions enable the server to execute the 3D display method applied to the metaverse described in the above embodiments. The implementation principles and technical effects are similar to the method embodiment and will not be repeated here.

The above embodiments are only used to illustrate the embodiments of the present application, and not to limit the present application. Although the present application has been described in detail with reference to the foregoing embodiments, those of ordinary skill in the art should understand that those embodiments can be modified, or some or all of the technical features can be equivalently replaced, and these modifications or substitutions do not deviate from the essence of the corresponding embodiments.

## Claims

1. A metaverse 3D display system, **characterized by** comprising:
a 3D display screen comprising:
a liquid crystal grating comprising grating units arranged in an array;
a liquid crystal display module comprising pixel units; and
a backlight module;
a processor configured to adjust voltages applied to the grating units according to depth values of pixels of a 3D image to be displayed, and display the 3D image on the liquid crystal display module through the liquid crystal grating,
wherein the liquid crystal grating, the liquid crystal display module and the backlight module are laminated sequentially from top to bottom, the grating units correspond to the pixel units of the liquid crystal display module one to one, and a direction of each grating unit is perpendicular to long sides of sub-pixels of the pixel units, or an included angle of the direction of each grating unit and the long sides of the sub-pixels of the pixel units is less than 45 degrees.

2. The metaverse 3D display system according to claim 1, **characterized in that**, when the 3D display screen is in a 3D display mode, the processor applies the voltages to the grating units of the liquid crystal grating; when the 3D display screen is switched from the 3D display mode to a 2D display mode, the processor removes the voltages to the grating units.

3. The metaverse 3D display system according to claim 2, **characterized in that** the processor is further configured to adjust values of the voltages applied to electrodes corresponding to the grating units corresponding to the pixels of the 3D image to be displayed according to changed amounts of depth values of depth information of the pixels, wherein the 3D image comprises a 2D image and a depth image corresponding to the 2D image, when a pixel value is changed, a depth value corresponding to the pixel value is changed accordingly, one side of the liquid crystal grating facing the liquid crystal screen is a ground electrode, and another side of the liquid crystal grating is provided with strip electrodes arranged in an array, the strip electrodes correspond to the pixel units of the liquid crystal display module one by one, each strip electrode is located in a center of a pixel and perpendicular to the long sides of the sub-pixels, an AC voltage relative to the ground electrode is applied to each strip electrode at a specific frequency and varies with change of a depth value of a corresponding pixel, to cause a focal length of an equivalent lenticular lens of a grating unit corresponding to the corresponding pixel to change.

4. The metaverse 3D display system according to claim 3, **characterized by** further comprising an optical system, wherein pixels of the liquid crystal display module are gathered in front of the 3D display screen through lenses, and the optical system is configured to present the pixels of the liquid crystal display module as virtual images, wherein, pixels whose convergence points are located in front of a first reflective mirror show an in-screen effect, and pixels whose convergence points are located behind the first reflective mirror present an out-of-screen effect, the optical system comprises one or more reflective mirrors comprising one or more of concave reflective mirrors, convex reflective mirrors, or plane reflective mirrors, and the first reflective mirror is for realize last reflection.

5. The metaverse 3D display system according to claim 4, **characterized in that** when the 3D display screen is in the 3D display mode, a non-zero basic voltage is applied to all electrodes for forming virtual images of the pixels of the liquid crystal display module through the optical system and forming a minimum viewing angle range of the metaverse 3D display system together with the optical system, wherein V=A+D*B, V represents the voltage applied to the electrode of the corresponding pixel, A represents the basic voltage, D represents the depth value of the corresponding pixel, and B is a constant coefficient.

6. The metaverse 3D display system according to claim 1, wherein the backlight module comprises a plurality of light source arrays arranged at intervals, and a gap filling layer is located between the light source arrays and the liquid crystal display module, a thickness of the gap filling layer is M, and M=L*D/N, L represents a viewing distance between human eyes and the liquid crystal display module, D is a minimum size of a pixel molecular unit, and N represents an interpupillary distance which is a true distance between a viewer's eyes.

7. The metaverse 3D display system according to claim 6, **characterized by** further comprising an electric controlled liquid crystal lens panel attached to the liquid crystal display module, wherein when the electric controlled liquid crystal lens panel is working, the naked-eye 3D display system is in a 3D display mode, and when the electric controlled liquid crystal is not working, the 3D display system is in a 2D display mode.

8. A 3D display method applied to metaverse, **characterized by** comprising a 3D display screen, wherein the 3D display screen comprises a liquid crystal grating, a liquid crystal display module and a backlight module that are laminated sequentially from top to bottom, wherein the liquid crystal grating comprises grating units arranged in an array, the grating units correspond to pixel units of the liquid crystal display module one to one, a direction of each grating unit is perpendicular to long sides of sub-pixels of the pixel units, or an included angle of the direction of each grating unit and the long sides of the sub-pixels of the pixel units is less than 45 degrees, the method comprises:
adjusting voltages applied to the grating units according to depth values of corresponding pixels of a 3D image to be displayed;
displaying the 3D image on the liquid crystal display module through the liquid crystal grating.

9. A computer device, **characterized by** comprising at least one connected processor connected with a memory and a transceiver, wherein the memory is configured to store program codes, and the processor is configured to call the program codes in the memory to execute the 3D display method applied to metaverse according to claim 8.

10. A computer storage medium for storing instructions, wherein when the instructions are run by a computer, the 3D display method applied to the metaverse according to claim 8 is realized by the computer.
